(19) Europäisches Patentamt
European Patent Office
Office européen des brevets

(11) Veröffentlichungsnummer: **0 597 336 A1**

(12) # EUROPÄISCHE PATENTANMELDUNG

(21) Anmeldenummer: **93117561.6**

(51) Int. Cl.[5]: **A01N 43/08**, B27K 3/34

(22) Anmeldetag: **29.10.93**

(30) Priorität: **11.11.92 DE 4237986**

(43) Veröffentlichungstag der Anmeldung:
**18.05.94 Patentblatt 94/20**

(84) Benannte Vertragsstaaten:
**AT BE CH DE DK ES FR GB IT LI NL PT SE**

(71) Anmelder: **BAYER AG**

**D-51368 Leverkusen(DE)**

(72) Erfinder: **Heuer, Lutz, Dr.**
**Scheibler Strasse 83**
**D-47800 Krefeld(DE)**
Erfinder: **Kugler, Martin, Dr.**
**Am Kloster 47**
**D-42799 Leichlingen(DE)**
Erfinder: **Schmitt, Hans-Georg, Dr.**
**Am Oberend 13**
**D-47809 Krefeld(DE)**
Erfinder: **Schwamborn, Michael, Dr.**
**Prämomstratener Strasse 76**
**D-51069 Köln(DE)**
Erfinder: **Wachtler, Peter, Dr.**
**Morgengraben 4**
**D-51061 Köln(DE)**
Erfinder: **Buschhaus, Hans-Ulrich, Dr.**
**Bethelstrasse 24**
**D-47800 Krefeld(DE)**

(54) **Verwendung von Furancarboxamiden im Materialschutz.**

(57) Furancarboxamide der Formel

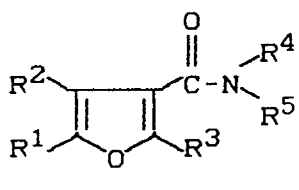

(I)

in welcher
$R^1$, $R^2$ und $R^3$ unabhängig voneinander für Wasserstoff oder Methyl stehen und
$R^4$ und $R^5$ unabhängig voneinander für Wasserstoff, Alkyl, gegebenenfalls substituiertes Phenyl oder für gegebenenfalls substituiertes Cycloalkyl stehen,
eignen sich sehr gut als Mikrobizide zum Schutz von technischen Materialien.

EP 0 597 336 A1

Rank Xerox (UK) Business Services
(3.10/3.09/3.3.4)

Die vorliegende Erfindung betrifft die Verwendung von teilweise bekannten Furancarboxamiden als Mikrobizide zum Schutz von technischen Materialien.

Es sind bereits zahlreiche Furancarboxamide und deren Einsatz zur Bekämpfung phytopathogener Pilze bekannt geworden (vgl. DE-OS 2 006 471 und DE-OS 2 006 472).

Weiterhin ist schon bekannt, daß sich 2,4-Dimethyl-5-carboxanilido-thiazol zum Schutz von Holz gegen Abbau durch Schadorganismen verwenden läßt (vgl. DE-OS 4 000 349). Die Wirksamkeit dieses Stoffes laßt jedoch vor allem bei niedrigen Aufwandmengen in manchen Fällen zu wünschen übrig.

Es wurde nun gefunden, daß sich Furancarboxamide der Formel

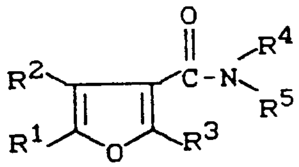

(I)

in welcher

$R^1$, $R^2$ und $R^3$ unabhängig voneinander für Wasserstoff oder Methyl stehen und

$R^4$ und $R^5$ unabhängig voneinander für Wasserstoff, Alkyl, gegebenenfalls substituiertes Phenyl oder für gegebenenfalls substituiertes Cycloalkyl stehen,

als Mikrobizide zum Schutz von technischen Materialien verwenden lassen.

Überraschenderweise eignen sich die erfindungsgemäß verwendbaren Furancarboxamide besser zur Bekämpfung von unerwünschten Mikroorganismen im Materialschutz als 2,4-Dimethyl-5-carboxanilido-thiazol, welches ein konstitutionell ähnlicher, vorbekannter Wirkstoff gleicher Wirkungsrichtung ist.

Die erfindungsgemäß verwendbaren Furancarboxamide sind durch die Formel (I) allgemein definiert.

$R^1$ steht vorzugsweise für Wasserstoff oder Methyl.

$R^2$ steht vorzugsweise für Wasserstoff oder Methyl.

$R^3$ steht vorzugsweise für Wasserstoff oder Methyl.

$R^4$ steht vorzugsweise für Wasserstoff, geradkettiges oder verzweigtes Alkyl mit 1 bis 12 Kohlenstoffatomen, gegebenenfalls einfach bis fünffach, gleichartig oder verschieden durch Halogen, Alkyl mit 1 bis 3 Kohlenstoffatomen, Alkoxy mit 1 bis 2 Kohlenstoffatomen, Halogenalkyl mit 1 bis 2 Kohlenstoffatomen und 1 bis 5 Halogenatomen und/oder Phenyl substituiertes Phenyl oder für Cycloalkyl mit 3 bis 8 Kohlenstoffatomen, wobei jeder dieser Cycloalkylreste einfach bis dreifach, gleichartig oder verschieden durch Alkyl mit 1 bis 4 Kohlenstoffatomen und/oder Halogen substituiert sein kann.

$R^5$ steht vorzugsweise für Wasserstoff, geradkettiges oder verzweigtes Alkyl mit 1 bis 12 Kohlenstoffatomen, gegebenenfalls einfach bis fünffach, gleichartig oder verschieden durch Halogen, Alkyl mit 1 bis 3 Kohlenstoffatomen, Alkoxy mit 1 bis 2 Kohlenstoffatomen, Halogenalkyl mit 1 bis 4 Kohlenstoffatomen und 1 bis 5 Halogenatomen und/oder Phenyl substituiertes Phenyl oder für Cycloalkyl mit 3 bis 8 Kohlenstoffatomen, wobei jeder dieser Cycloalkylreste einfach bis dreifach, gleichartig oder verschieden durch Alkyl mit 1 bis 4 Kohlenstoffatomen und/oder Halogen substituiert sein kann.

$R^1$ steht auch besonders bevorzugt für Wasserstoff oder Methyl.

$R^2$ steht ebenfalls besonders bevorzugt für Wasserstoff oder Methyl.

$R^3$ steht auch besonders bevorzugt für Wasserstoff oder Methyl.

$R^4$ steht besonders bevorzugt für Wasserstoff, geradkettiges oder verzweigtes Alkyl mit 1 bis 6 Kohlenstoffatomen, gegebenenfalls einfach bis dreifach, gleichartig oder verschieden durch Fluor, Chlor, Brom, Methyl, Ethyl, Methoxy, Ethoxy, Trifluormethyl und/oder Phenyl substituiertes Phenyl oder für Cycloalkyl mit 3 bis 7 Kohlenstoffatomen, wobei jeder dieser Cycloalkylreste einfach bis dreifach, gleichartig oder verschieden durch Methyl, Ethyl, n-Propyl, Isopropyl, n-Butyl, tert.-Butyl, Fluor, Chlor und/oder Brom substituiert sein kann.

$R^5$ steht besonders bevorzugt für Wasserstoff, geradkettiges oder verzweigtes Alkyl mit 1 bis 6 Kohlenstoffatomen, gegebenenfalls einfach bis dreifach, gleichartig oder verschieden durch Fluor, Chlor, Brom, Methyl, Ethyl, Methoxy, Ethoxy, Trifluormethyl und/oder Phenyl substituiertes Phenyl oder für Cycloalkyl mit 3 bis 7 Kohlenstoffatomen, wobei jeder dieser Cycloalkylreste einfach bis dreifach, gleichartig oder verschieden durch Methyl, Ethyl, n-Propyl, Isopropyl, n-Butyl, tert.-Butyl, Fluor, Chlor und/oder Brom substituiert sein kann.

Als Beispiele für erfindungsgemäß verwendbare Stoffe seien die in der folgenden Tabelle 1 aufgeführten Furancarboxamide genannt.

<u>Tabelle 1</u>

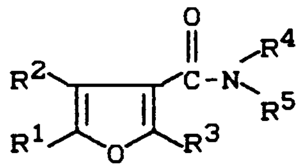

(I)

| $R^1$ | $R^2$ | $R^3$ | $R^4$ | $R^5$ |
|---|---|---|---|---|
| H | $CH_3$ | $CH_3$ | H | $-CH_3$ |
| $CH_3$ | $CH_3$ | $CH_3$ | $CH_3$ | $-C_2H_5$ |
| $CH_3$ | H | $CH_3$ | H | $-C_3H_7$-n |
| $CH_3$ | H | $CH_3$ | H | $-C_4H_9$-t |
| $CH_3$ | $CH_3$ | H | H | 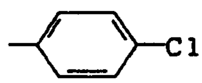 |
| $CH_3$ | H | $CH_3$ | H | 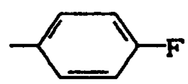 |
| $CH_3$ | H | $CH_3$ | H | 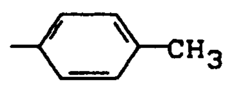 |
| $CH_3$ | H | $CH_3$ | H | 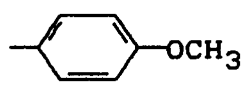 |
| $CH_3$ | H | $CH_3$ | H | 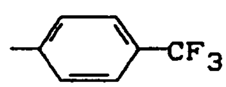 |

Tabelle 1 - Fortsetzung

| $R^1$ | $R^2$ | $R^3$ | $R^4$ | $R^5$ |
|---|---|---|---|---|
| $CH_3$ | H | $CH_3$ | H | 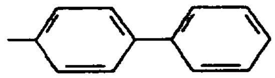 |
| $CH_3$ | H | $CH_3$ | H | 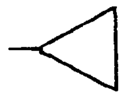 |
| $CH_3$ | H | $CH_3$ | H | 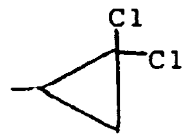 |
| $CH_3$ | H | $CH_3$ | H | 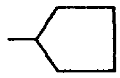 |
| $CH_3$ | H | $CH_3$ | H | 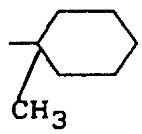 |

Die erfindungsgemäß verwendbren Furancarboxamide sind teilweise bekannt (vgl. DE-OS 2 006 471 und DE-OS 2 006 472). Sie lassen sich herstellen, indem man Hydroxyketone der Formel

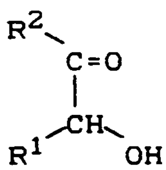

(II)

in welcher
$R^1$ und $R^2$ die oben angegebenen Bedeutungen haben,
mit Acetamiden der Formel

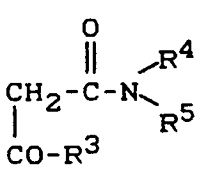

(III)

in welcher
$R^3$, $R^4$ und $R^5$ die oben angegebenen Bedeutungen haben,
in Gegenwart eines Friedel-Crafts-Katalysators, wie z.B. Aluminiumchlorid oder Aluminiumbromid, sowie in Gegenwart eines inerten organischen Verdünnungsmittels, wie z.B. Benzol, Toluol oder Xylol, bei Temperaturen zwischen 20 °C und 80 °C umsetzt. Die Aufarbeitung erfolgt nach üblichen Methoden. Im allgemeinen

geht man in der Weise vor, daß man das Reaktionsgemisch mit Wasser und Salzsäure versetzt, die organische Phase abtrennt und nach dem Waschen und Trocknen einengt. Das dabei anfallende Produkt kann zum Beispiel durch Umkristallisation von gegebenenfalls noch vorhandenen Verunreinigungen befreit werden.

Die bei der Herstellung der erfindungsgemäß verwendbaren Furancarboxamide nach dem obigen Verfahren als Ausgangsstoffe benötigten Hydroxyketone der Formel (II) bzw. Acetamide der Formel (III) sind bekannt oder lassen sich nach prinzipiell bekannten Methoden herstellen.

Die erfindungsgemäß verwendbaren Wirkstoffe weisen eine starke mikrobizide Wirkung auf und können zum Schutz von technischen Materialien gegen Befall und Zerstörung durch unerwünschte Mikroorganismen eingesetzt werden.

Unter technischen Materialien sind im vorliegenden Zusammenhang nicht-lebende Materialien zu verstehen, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Ganz besonders bevorzugt eignen sich die erfindungsgemäß verwendbaren Stoffe zum Schutz von Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:

Alternaria, wie Alternaria tenuis, Aspergillus, wie Aspergillus niger, Chaetomium, wie Chaetomium globosum, Coniophora, wie Coniophora puteana, Lentinus, wie Lentinus tigrinus, Penicillium, wie Penicillium glaucum, Polyporus, wie Polyporus versicolor, Aureobasidium, wie Aureobasidium pullulans, Sclerophoma, wie Sclerophoma pityophila, Trichoderma, wie Trichoderma viride, Escherichia, wie Escherichia coli, Pseudomonas, wie Pseudomonas aeruginosa, Staphylococcus, wie Staphylococcus aureus, Coriolus, wie Coriolus versicolor, Stereum, wie Stereum sanguinoleum, Poria, wie Poria placenta, Gloeophyllum, wie Gloeophyllum trabeum.

Je nach Anwendungsgebiet können die erfindungsgemäß zu verwendenden Wirkstoffe in die üblichen Formulierungen überführt werden, wie Losungen, Emulsionen, Suspensionen, Pulver, Pasten und Granulate.

Diese können in an sich bekannter Weise hergestellt werden, z.B. durch Vermischen der Wirkstoffe mit einem Streckmittel, das aus flüssigem Lösungsmittel und/oder festen Trägerstoffen besteht, gegebenenfalls unter Verwendung von oberflachenaktiven Mitteln, wie Emulgatoren und/oder Dispergiermitteln, wobei gegebenenfalls im Falle der Benutzung von Wasser als Streckmittel organische Lösungsmittel wie Alkohole als Hilfsmittel verwendet werden können.

Flüssige Lösungsmittel für die Wirkstoffe können beispielsweise Wasser, Alkohole, wie niedere aliphatische Alkohole, vorzugsweise Ethanol oder Isopropanol, oder Benzylalkohol, Ketone wie Aceton oder Methylethylketon, flüssige Kohlenwasserstoffe wie Benzinfraktionen, halogenierte Kohlenwasserstoffe wie 1,2-Dichlorethan sein.

Die Wirksamkeit und das Wirkungsspektrum der erfindungsgemäß verwendbaren Wirkstoffe bzw. den daraus herstellbaren Mitteln, Konzentraten oder ganz allgemein Formulierungen kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungsspektrums oder Erzielung besonderer Effekte wie z.B. dem zusätzlichen Schutz vor Insekten zugesetzt werden. Diese Mischungen können ein breiteres Wirkungsspektrum besitzen als die erfindungsgemäßen Verbindungen.

In vielen Fällen erhält man dabei synergistische Effekte, d.h. die Wirksamkeit der Mischung ist größer als die der Wirksamkeit der Einzelkomponenten. Besonders günstige Mischungspartgner sind z.B. die folgenden Verbindungen:

Sulfenamide wie Dichlorfluanid (Euparen), Tolylfluanid (Methyleuparen), Folpet, Fluorfolpet;
Benzimidazole wie Carbendazim (MBC), Benomyl, Fuberidazole, Thiabendazole oder deren Salze;
Thiocyanate wie Thiocyanatomethylthiobenzothiazol (TCMTB), Methylenbisthiocyanat (MBT);
quartäre Ammoniumverbindungen wie Benzyldimethyltetradecylammoniumchlorid, Benzyl-dimethyl-dodecyl-ammoniumchlorid, Didecyl-dimethyl-ammoniumchlorid; Morpholinderivate wie $C_{11}$-$C_{14}$-4-Alkyl-2,6-dimethyl-morpholinhomologe (Tridemorph),(±)-cis-4-[3-tert.-Butylphenyl]-2,6-dimethylmorpholin(Fenpropimorph), Falimorph;

Phenole wie o-Phenylphenol, Tribromphenol, Tetrachlorphenol, Pentachlorphenol, 3-Methyl-4-chlorphenol, Dichlorophen, Chlorophen oder deren Salze;

Azole wie Triadimefon, Triadimenol, Bitertanol, Tebuconazole, Propiconazole, Azaconazole, Hexaconazole, Prochloraz; 1-(2-Chlorphenyl)-2-(1-chlorcyclopropyl)-3-(1,2,4-triazol-1-yl)-propan-2-ol, 1-(2-Chlorphenyl)-2-(1,2,4-triazol-1-yl-methyl)-3,3-dimethyl-butan-2-ol und 1-(4-Chlorphenyl)-1-(1-cyclopropyl-ethyl)-2-(1,2,4-triazol-1-yl)-ethan-1-ol.

Isopropargylderivate wie Iodpropargyl-butylcarbamat (IPBC), -chlorophenylformal, -phenylcarbamat, -hexylcarbamat, -cyclohexylcarbamat, Iodpropargyloxyethylphenylcarbamat;

Iodderivate wie Diiodmethyl-p-arylsulfone z.B. Diiodmethyl-p-tolylsulfon;

Bromderivate wie Bromopol;

Isothiazolinone wie N-Methylisothiazolin-3-on, 5-Chloro-N-methylisothiazolin-3-on, 4,5-Dichloro-N-octylisothiazolin-3-on, N-Octylisothiazolin-3-on (Octilinone);

Benzisothiazolinone, Cyclopentenisothiazoline;

Pyridine wie 1-Hydroxy-2-pyridinthion (und ihre Na-, Fe-, Ma, Zn-Salze), Tetrachlor-4-methylsulfonylpyridin;

Metallseifen wie Zinn-, Kupfer-, Zink-naphthenat, -octoat, -2-ethylhexanoat, -oleat, phosphat, -benzoat, Oxide wie TBTO, $Cu_2O$, CuO, ZnO;

Organische Zinnverbindungen wie Tributylzinnnaphthenat und Tributylzinnoxid;

Nitrile wie 2,4,5,6-Tetrachlorisophthalonitril (Chlorthalonil) u.a. Mikrobizide mit aktivierten Halogengruppen wie Cl-Ac, MCA, Tectamer, Bronopol, Bromidox;

Benzthiazole wie 2-Mercaptobenzothiazol; s.o. Dazomet;

Chinoline wie 8-Hydroxychinolin;

Formaldehydabspaltende Verbindungen wie Benzylalkoholmono(poly)hemiformal, Oxazolidine, Hexahydro-s-triazine, N-Methylolchloracetamid;

Tris-N-(Cyclohexyldiazeniumdioxy)-Aluminium, N-(Cyclohexyldiazeniumdioxy)-Tributylzinn bzw. K.Salze, Bis-(N-cyclohexyl)diazinium (-dioxy- Kupfer oder Aluminium);

Als Insektizide werden bevorzugt zugesetzt:

Phosphorsäureester wie Azinphos-ethyl, Azinphos-methyl, 1-(4-Chlorphenyl)-4-(O-ethyl, S-propyl)-phosphoryloxypyrazol (TiA-230), Chlorpyrifos, Coumaphos, Demeton, Demeton-S-methyl, Diazinon, Dichlorvos, Dimethoate, Ethoprophos, Etrimfos, Fenitrothion, Fention, Heptenophos, Parathion, Parathion-methyl, Phosalone, Phoxion, Pirimiphos-ethyl, Pirimiphos-methyl, Profenofos, Prothiofos, Sulprofos, Triazophos und Trichlorphon.

Carbamate wie Aldicarb, Bendiocarb, BPMC (2-(1-Methyl-propyl)phenylmethylcarbamat), Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb.

Pyrethroide wie Allethrin, Bioresmethrin, Byfenthrin (FMC 54 800), Cycloprothrin, Cyfluthrin, Decamethrion, Cyhalothrin, Cypermethrin, Deltamethrin, Alpha-cyano-3-phenyl-2-methylbenzyl-2,2-dimethyl-3-(2-chlor-2-trifluormethyl-vinyl)cyclopropancarboxylat, Fenpropathrin, Fenfluthrin, Fenvalerate, Flucythrinate, Flumethrin, Fluvalinate, Permethrin und Resmethrin, Nitroimino und Nitromethylene wie 1-[(6-Chlor-3-pyridinyl)-methyl]-4,5-dihydro-N-nitro-1H-imidazol-2-amin (Imidacloprid).

Organosiliciumverbindungen, vorzugsweise Dimethyl(phenyl)silylmethyl-3-phenoxy-benzylether, wie z.B. Dimethyl(4-ethoxyphenyl)-silylmethyl-3-phenoxy-benzylether oder Dimethyl(phenyl)-silylmethyl-2-phenoxy-6-pyridylmethylether wie z.B. Dimethyl(9-ethoxyphenyl)-silylmethyl-2-phenoxy-6-pyridylmethylether oder (Phenyl)[3-(3-phenoxyphenyl)-propyl](dimethyl)-silane wie z.B. (4-ethoxyphenyl)-[3-(4-fluoro-3-phenoxyphenyl)-propyl]dimethyl)-silan.

Besonders bevorzugt sind Mischungen aus Furancarboxamiden der Formel (I), einem Azol und einem quartären Ammoniumsalz.

Als andere Wirkstoffe kommen in Betracht Algizide, Molluskizide, Wirkstoffe gegen "sea animals", die sich auf z.B. Schiffsbodenanstrichen ansiedeln.

Die zum Schutz der technischen Materialien verwendeten mikrobiziden Mittel oder Konzentrate enthalten die erfindungsgemäß verwendbaren Wirkstoffe in einer Konzentration von 0,001 bis 95 Gew.-%, insbesondere 0,01 bis 60 Gew.-%, daneben gegebenenfalls 0,001 bis 10 Gew.-% eines geeigneten weiteren Fungizids, Insektizids oder eines weiteren Wirkstoffs wie oben genannt.

Die erfindungsgemäß verwendbaren Wirkstoffe bzw. Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

Die Herstellung von Wirkstoffen und deren erfindungsgemäße Verwendung werden durch die folgenden Beispiele veranschaulicht.

Herstellungsbeispiel

Beispiel 1

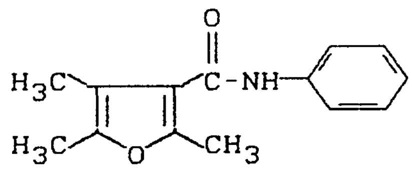

(I-1)

In ein Gemisch aus 354 g (2 Mol) Acetoacetanilid, 176 g (2 Mol) trockenem Acetoin und 1.500 ml trockenem Toluol werden unter Rühren bei Raumtemperatur 133 g (1 Mol) Aluminiumchlorid gegeben. Das Reaktionsgemisch wird unter weiterem Rühren langsam bis auf 50 °C erwärmt. Danach steigt die Temperatur des Reaktionsgemisches bedingt durch die exotherme Reaktion bis zum Siedepunkt an. Nach dem Abklingen der Reaktion rührt man noch 30 Minuten unter Rückfluß, läßt dann auf 80 °C abkühlen und versetzt mit 300 ml Wasser und 200 ml 6n-Salzsäure. Der anfallende Niederschlag wird abfiltriert, nacheinander mit verdünnter Salzsäure, Wasser und Toluol gewaschen und anschließend getrocknet. Beim Einengen der Toluol-Mutterlauge fällt weiteres Produkt an, das ebenfalls abfiltriert, gewaschen und getrocknet wird. Man erhält auf diese Weise 2,4,5-Trimethyl-3-carboxanilido-furan in Form einer farblosen Festsubstanz vom Schmelzpunkt 142 °C.

In analoger Weise werden auch die in der folgenden Tabelle 2 aufgeführten Furancarboxamide der Formel (I) hergestellt.

Tabelle 2

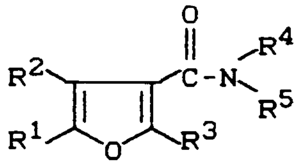

(I)

| Beisp. Nr. | $R^1$ | $R^2$ | $R^3$ | $R^4$ | $R^5$ | Physikalische Konstante |
|---|---|---|---|---|---|---|
| 2 | $CH_3$ | H | $CH_3$ | H | 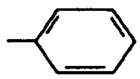 | Fp. 90-92° C |
| 3 | H | $CH_3$ | $CH_3$ | H | 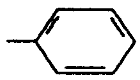 | |
| 4 | H | H | $CH_3$ | H | 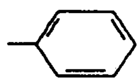 | Fp. 109° C |
| 5 | $CH_3$ | H | $CH_3$ | H | 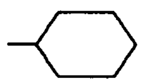 | Fp. 141-143° C |
| 6 | H | $CH_3$ | $CH_3$ | H | 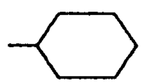 | |
| 7 | H | H | $CH_3$ | H | 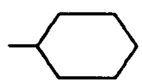 | Fp. 90-92° C |
| 8 | $CH_3$ | $CH_3$ | $CH_3$ | H | 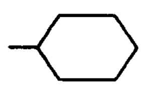 | |

Verwendungsbeispiele

In den folgenden Verwendungsbeispielen wurde die nachstehend angegebene Verbindung als Vergleichssubstanz eingesetzt:

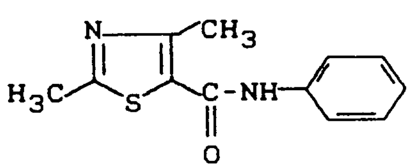

= (A)

(Bekannt aus DE-OS 4 000 349)

Beispiel A

Riesenkolonie-Test

Zum Nachweis der Wirksamkeit gegen holzzerstörende Basidiomyceten wird bestimmt, welche prozentuale Hemmwirkung bei Riesenkolonien bestimmter Species erzielt wird, die mit den jeweiligen Wirkstoffen behandelt werden. Dazu wird unter Verwendung von Malzextrakt ein Agar hergestellt und mit Wirkstoff-Formulierungen bestimmter Konzentrationen versetzt. Nach dem Erstarren des Agars wird mit gut bewachsenen, zylindrischen Agarstückchen, die einen Durchmesser von 5 mm aufweisen, beimpft. Man läßt die behandelten Agarzubereitungen 7 Tage bei einer Temperatur von 27 °C stehen und mißt dann den Durchmesser der entstandenen Kolonien. Unbehandelte Kontrollplaten dienen als Referenz. die ermittelten Werte werden im Prozent ausgedrückt. Dabei bedeutet 0 %, daß keine Hemmwirkung ein tritt. 100 % bedeuten eine vollständige Hemmung des Wachstums.

Wirkstoffe, Wirkstoffkonzentrationen und Versuchsergebnisse gehen aus der folgenden Tabelle hervor.

**Tabelle A**

Riesenkolonie-Test

| Wirkstoff | Wirkstoff konzentration im Agar in ppm | Prozentuale Hemmwirkung bei: Lentinus tigrinus | Gloeophyllum trabeum | Coniophora puteana | Coriolus versicolor | Stereum sanguinoleum | Poria placenta |
|---|---|---|---|---|---|---|---|
| - (Kontrolle) | - | 0 | 0 | 0 | 0 | 0 | 0 |
| Bekannt: 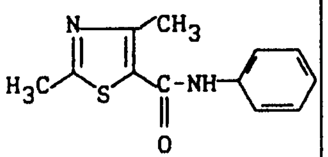 (A) | 3 | 50 | 40 | 95 | 80 | 55 | 40 |
| Erfindungsgemäß: 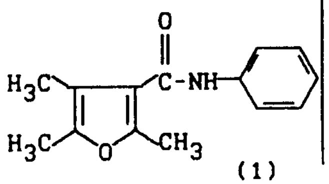 (1) | 3 | 100 | 100 | 100 | 100 | 100 | 100 |

## Patentansprüche

1. Verwendung von Furancarboxamiden der Formel

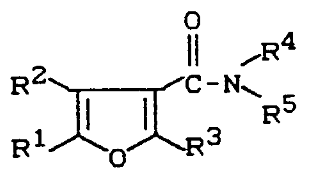

(I)

in welcher

$R^1$, $R^2$ und $R^3$ unabhängig voneinander für Wasserstoff oder Methyl stehen und

$R^4$ und $R^5$ unabhängig voneinander für Wasserstoff, Alkyl, gegebenenfalls substituiertes Phenyl oder für gegebenenfalls substituiertes Cycloalkyl stehen,

als Mikrobizide zum Schutz von technischen Materialien.

**2.** Verwendung gemäß Anspruch 1, dadurch gekennzeichnet, daß man Verbindungen der Formel (I) einsetzt, in denen

$R^1$ für Wasserstoff oder Methyl steht,

$R^2$ für Wasserstoff oder Methyl steht,

$R^3$ für Wasserstoff oder Methyl steht,

$R^4$ für Wasserstoff, geradkettiges oder verzweigtes Alkyl mit 1 bis 12 Kohlenstoffatomen, gegebenenfalls einfach bis fünffach, gleichartig oder verschieden durch Halogen, Alkyl mit 1 bis 3 Kohlenstoffatomen, Alkoxy mit 1 bis 2 Kohlenstoffatomen, Halogenalkyl mit 1 bis 4 Kohlenstoffatomen und 1 bis 5 Halogenatomen und/oder Phenyl substituiertes Phenyl steht oder für Cycloalkyl mit 3 bis 8 Kohlenstoffatomen steht, wobei jeder dieser Cycloalkylreste einfach bis dreifach, gleichartig oder verschieden durch Alkyl mit 1 bis 4 Kohlenstoffatomen und/oder Halogen substituiert sein kann, und

$R^5$ für Wasserstoff, geradkettiges oder verzweigtes Alkyl mit 1 bis 12 Kohlenstoffatomen, gegebenenfalls einfach bis fünffach, gleichartig oder verschieden durch Halogen, Alkyl mit 1 bis 3 Kohlenstoffatomen, Alkoxy mit 1 bis 2 Kohlenstoffatomen, Halogenalkyl mit 1 bis 4 Kohlenstoffatomen und 1 bis 5 Halogenatomen und/oder Phenyl substituiertes Phenyl steht oder für Cycloalkyl mit 3 bis 8 Kohlenstoffatomen steht, wobei jeder dieser Cycloalkylreste einfach bis dreifach, gleichartig oder verschieden durch Alkyl mit 1 bis 4 Kohlenstoffatomen und/oder Halogen substituiert sein kann.

**3.** Verfahren zur Bekämpfung unerwünschter Mikroorganismen im Materialschutz, dadurch gekennzeichnet, daß man Furancarboxamide der Formel (I) gemäß Anspruch 1 auf die Mikroorganismen und/oder deren Lebensraum ausbringt.

Europäisches Patentamt

# EUROPÄISCHER RECHERCHENBERICHT

Nummer der Anmeldung
EP 93 11 7561

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X | CHEMICAL PATENTS INDEX, DOCUMENTATION ABSTRACTS JOURNAL<br>Week 9323, 11. August 1993<br>Derwent Publications Ltd., London, GB;<br>AN 93-185132/23<br>& JP-A-5 112 406 (SANKYO CO. LTD.) 7. Mai 1993<br>* Zusammenfassung *<br>--- | 1-3 | A01N43/08<br>B27K3/34 |
| X | DE-A-20 19 535 (BASF AG)<br>* insgesamt; insbesondere Seite 1, Absatz 3 - Seite 2, Zeile 1 und Beispiel 7 *<br>--- | 1-3 | |
| D,Y | DE-A-20 06 471 (UNIROYAL INC.)<br>* Seite 1 - Seite 2, Absatz 1 *<br>* Seite 4, Absatz 2 *<br>* Ansprüche 1-13 *<br>--- | 1-3 | |
| Y | DE-A-24 55 082 (BASF AG)<br>* Seite 1 *<br>* Seite 9, Absatz 3 *<br>--- | 1-3 | RECHERCHIERTE SACHGEBIETE (Int.Cl.5) |
| A | DE-A-27 03 023 (BASF)<br>* Seite 3 - Seite 4, Absatz 1 *<br>* Beispiel 7 *<br>--- | 1-3 | B27K<br>A01N |
| D,A | DE-A-400 349 (HORA LANDWIRTSCHAFTLICHE BETRIEBSMITTEL GMBH)<br>* Anspruch 1 *<br>----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 28. Februar 1994 | Muellners, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)